(19) Europäisches Patentamt / European Patent Office / Office européen des brevets

(11) **EP 4 704 043 A1**

(12) **EUROPEAN PATENT APPLICATION**

(43) Date of publication:
**04.03.2026  Bulletin 2026/10**

(21) Application number: **25187498.8**

(22) Date of filing: **04.07.2025**

(51) International Patent Classification (IPC):
**G06V 10/74** (2022.01)   **G06V 10/82** (2022.01)
**G06V 20/17** (2022.01)

(52) Cooperative Patent Classification (CPC):
**G06V 20/17; G06V 10/761; G06V 10/82**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.08.2024  US 202418818351**

(71) Applicant: **The Boeing Company
Arlington, VA 22202 (US)**

(72) Inventors:
- **RATZLAFF, Neale
  Arlington, 22202 (US)**
- **NGUYEN, Leon
  Arlington, 22202 (US)**
- **LATIB, Tameez
  Arlington, 22202 (US)**

- **HUNG, Fan Hin
  Arlington, 22202 (US)**
- **KHOSLA, Deepak
  Arlington, 22202 (US)**
- **HAGHIGHAT, Arya
  Arlington, 22202 (US)**
- **MATTEI-MENDEZ, Luis
  Arlington, 22202 (US)**
- **NEIGHBOR, Joshua
  Arlington, 22202 (US)**
- **YANG, Yifan
  Arlington, 22202 (US)**

(74) Representative: **St Clair Jones, Gregory Arthur
Langley et al
Kilburn & Strode LLP
Lacon London
84 Theobalds Road
London WC1X 8NL (GB)**

(54) **METHOD AND SYSTEM FOR OUT-OF-DOMAIN DETECTION**

(57)    Disclosed herein are methods, systems, and aircraft for performing image analysis for aiding refueling operations. A method includes receiving a 2D image from a camera, determining a domain score for the 2D image based on previously defined training data, and sending the 2D image to the vision position estimation system in response to the domain score being greater than a predefined threshold, thus creating a sent 2D image.

FIG. 8

**Description**

**FIELD**

This disclosure relates generally to image analysis systems, and more particularly to controlling automated systems using an image analysis system.

**BACKGROUND**

Cameras provide information for aerial refueling operations or other automated operations (e.g., factory line, etc.). When using a single camera, the probability that an estimation system, given a two-dimensional (2D) input, produces an accurate three-dimensional (3D) position (pose) estimate of an object (airplane) can be low. Such systems are prone to error if the deployment conditions are such that incoming data is not similar to data on which those systems were validated.

**SUMMARY**

The subject matter of the present application has been developed in response to the present state of the art, and in particular, in response to the shortcomings of conventional aerial refueling techniques, which have not yet been fully solved by currently available techniques. Accordingly, the subject matter of the present application has been developed to provide systems and methods for providing aerial refueling techniques that overcome at least some of the above-discussed shortcomings of prior art techniques.

The following is a non-exhaustive list of examples, which may or may not be claimed, of the subject matter, disclosed herein.

In one example, a method includes receiving a 2D image, determining a domain score for the 2D image based on previously defined training data, and sending the 2D image to the vision position estimation system in response to the domain score being greater than a predefined threshold, thus creating a sent 2D image. As discussed further herein, the vision position estimation system determines the position, or more specifically the pose, of a target object such as a refueling aircraft, a tanker aircraft, and/or a refueling boom from the 2D image. The 2D image may be from a camera of a first device, the first device in some implementations being a tanker aircraft or a refueling boom (of the tanker aircraft). The domain score (also referred to as an out-of-domain or OOD score) is used to determine whether the 2D image is in-domain or out-of-domain. An in-domain 2D image is indicative that the image is sufficiently similar to corresponding images from training data. On the other hand, an out-of-domain 2D image is indicative that the image is sufficiently different to corresponding images from training data. This is further discussed with reference to the masked autoencoder and adversarial discriminator.

By determining whether an input image is in-domain or out-of-domain (e.g., using a domain or OOD score), this enables images which do not fall within the domain (i.e., range) for which the system was designed or trained to be excluded. That is, the domain or OOD score is a score which can be used to measure how similar an input image (e.g., the 2D image) is to an image from training data. In some implementations, a structural similarity index measure (SSIM) may be used to produce this domain or OOD score by comparing a received image which has a masked applied and is reconstructed compared to the unmasked input image.

By determining such a domain or OOD score, the score can be used to exclude out-of-domain images which do not fall within the domain which the model was designed or trained. In this way, atypical or outlier images which the model was not designed or trained on, and which could provide inaccurate determination of the pose can be avoided. Specifically, the OOD images may, e.g., not be sent to the vision position estimation system and/or may be used by an automated controller to make decisions to engage or pause an aerial refueling operation. In an example, if incoming flight data is out-of-domain with respect to the training data, which could yield unreliable predictions, the detection of OOD images (e.g., the domain or OOD score) can be used to decide that operation conditions are not suitable for refueling. As a result, determining a domain or OOD score enables improved reliability and safety for aerial refueling operations.

In another example, a tanker aircraft includes a camera, a refueling boom, the camera configured to generate a 2D image of the refueling boom, a processor, and (optionally non-transitory) computer readable storage media storing code. The code being executable by the processor to perform operations including determining a domain score for the 2D image based on previously defined training data and sending the 2D image to a vision position estimation system in response to the domain score being greater than a predefined threshold, thus creating a sent 2D image.

In still another example, a system includes a camera configured to produce a two-dimensional (2D) image of a first device after activating a vision position estimation system, a processor, and (optionally non-transitory) computer readable storage media storing code. The code is executable by the processor to perform operations comprising determining a domain score for the 2D image based on previously defined training data and sending the 2D image the vision position estimation system in response to the domain score being greater than a predefined threshold, thus creating a sent 2D image.

The described features, structures, advantages, and/or characteristics of the subject matter of the present disclosure may be combined in any suitable manner in one or more examples and/or implementations. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example or implementation. In other instances, additional features and advantages may be recognized in certain examples and/or implementations that may not be present in all examples or implementations. Further, in some instances, well-known structures, materials, or operations are not shown or described in detail to avoid obscuring aspects of the subject matter of the present disclosure. The features and advantages of the subject matter of the present disclosure will become more fully apparent from the following description and appended claims or may be learned by the practice of the subject matter as set forth hereinafter.

## BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings depict only typical examples of the subject matter, they are not therefore to be considered to be limiting of its scope. The subject matter will be described and explained with additional specificity and detail through the use of the drawings, in which:

Figure 1 is a schematic block diagram of a tanker aircraft with an automated refueling system, according to one or more examples of the present disclosure;

Figure 2 is a schematic, side elevation view of an aircraft refueling operation, according to one or more examples of the present disclosure;

Figure 3 is a camera view of a receiving aircraft during a refueling operation, according to one or more examples of the present disclosure;

Figure 4 is a side view of different versions of a receiver aircraft, according to one or more examples of the present disclosure;

Figure 5 is a flow chart of a method of detecting out-of-domain for images received from a camera device, according to one or more examples of the present disclosure;

Figure 6 is a flow chart of a method of detecting an out-of-domain score for an image received from a camera device, according to one or more examples of the present disclosure;

Figure 7 is a schematic flow diagram of a system for optimizing image analysis for close quarter operations of vehicles, according to one or more examples of the present disclosure; and

Figure 8 is a flow chart of a method of optimizing image analysis for close quarter operations of vehicles, according to one or more examples of the present disclosure.

## DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Disclosed herein are examples of a system (i.e., the vision position estimation system) that tracks 6 degrees-of-freedom (6DOF) of an object (a known object model) based on detecting hand-selected keypoints from a rigid 3D model in a 2D image and using perspective-n-point (PnP) optimization over multiple timesteps. The tracked 6DOF information may be used for autonomous control purposes and/or visual guidance during close operations, such as, without limitation, an aerial refueling operation.

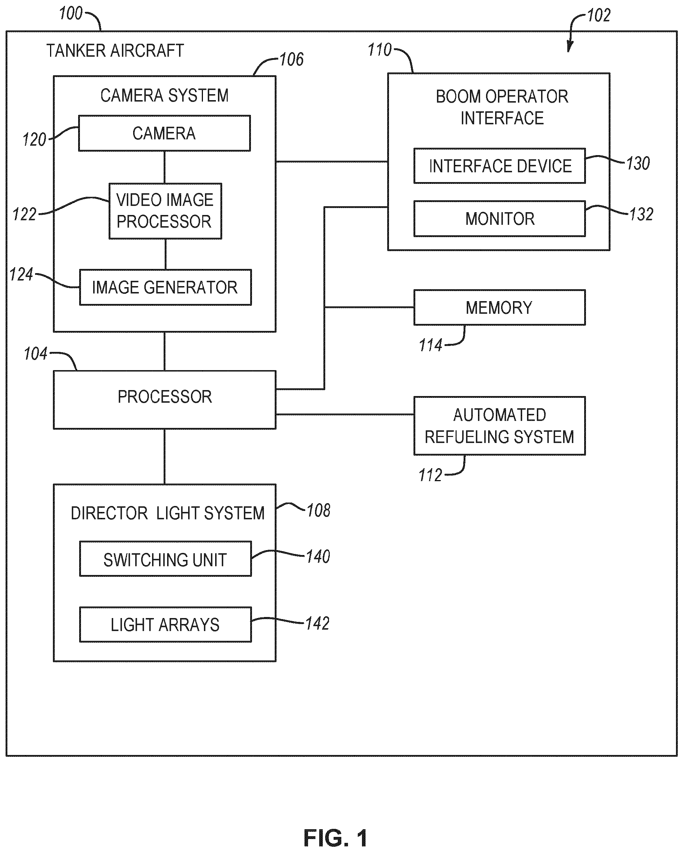

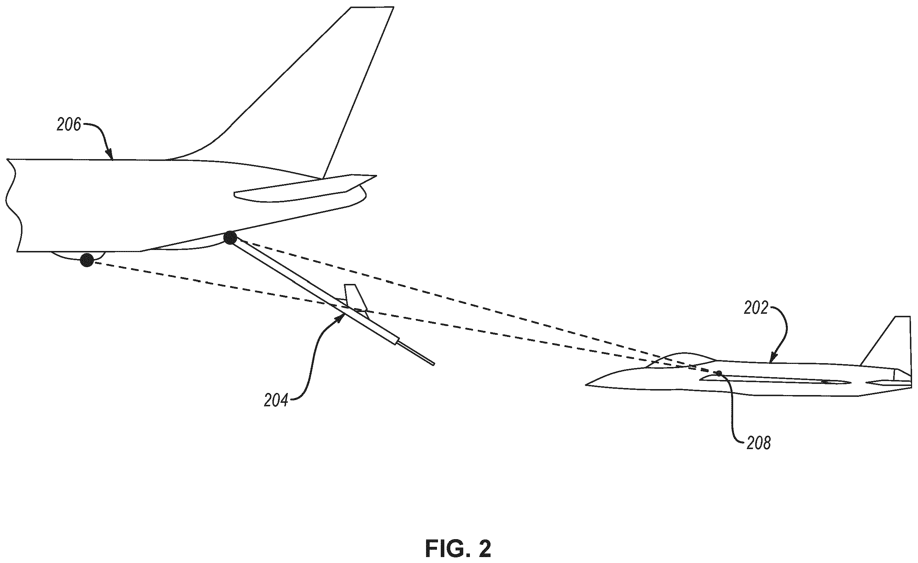

As shown in Figures 1 and 2, in various examples, a refueling system 102 includes a processor 104, a camera system 106, a director light system 108, a boom operator interface 110, an automated refueling system 112, and memory 114.

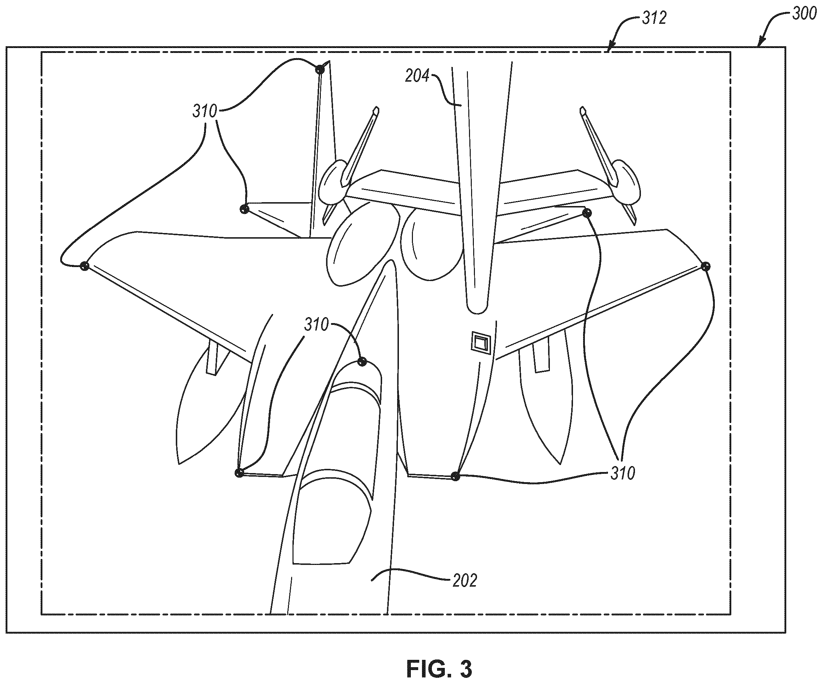

In various examples, the camera system 106 includes a camera 120, a video image processor 122, and an image generator 124. The camera 120 is mounted approximately to a fixed platform within a fared housing attached to a lower aft portion of the fuselage 206 of a tanker aircraft 100. The camera 120 includes a lens or lenses having remotely operated focus and zoom capability. Moreover, the camera 120 is located in an aft position relative to and below the fuselage 206 of the tanker aircraft 100. The video image processor 122 receives digitized video images from the camera 120 and generates real-time 2D video images. The digitized video images include the objects viewed by the camera 120 (e.g., a receiver aircraft 202 and a refueling boom 204 of the tanker aircraft 100 (see, e.g., Figures 2 and 3)) within a vision cone. The image generator 124 then generates images for presentation on a monitor 132 of the boom operator interface 110.

The camera system 106 is configured to produce a two-dimensional (2D) image 300 of a three-dimensional (3D) space, including at least the refueling boom 204 of the tanker aircraft 100, in a deployed state, and the receiver aircraft 202 (see, e.g., Figure 3). The 2D image 300 includes an approach and refueling zone into which the receiver aircraft 202 enters for refueling operations. The receiver aircraft 202 includes a boom nozzle receiver 208 capable of being coupled to the refueling boom 204 so that fuel from the tanker aircraft 100 can be transferred to the receiver aircraft 202 in an aerial refueling operation.

In various examples, the boom operator interface 110 includes a user interface device 130 and the monitor 132. Images presented on the monitor 132 are based on information provided by the processor 104. The director light system 108 includes a switching unit 140 and light arrays 142 (i.e., pilot director lights). The switching unit 140 controls activation of the array of lights 142 based on information provided by the processor 104. The automated refueling system 112 controls operation of the refueling boom 204 and/or the tanker aircraft 100, to executing an aerial refueling operation, based on information provided by the processor 104.

It can be appreciated that refueling or close quarter operations may occur between vehicles other than aircraft and may occur during any of various conditions, such as adverse weather conditions. The vehicles may be any vehicles that move relative to each other (in water, on land, in air, or in space). The vehicles may also be manned or unmanned. Given by way of non-limiting example, in various examples, the vehicles are motor vehicles driven by wheels and/or tracks, such as, without limitation, an automobile, a truck, a cargo van, and the like. Given by way of further non-limiting examples, in various examples, the vehicles are marine vessels such as, without limitation, a boat, a ship, a submarine, a submersible, an autonomous underwater vehicle (AUV), and the like. Given by way of further non-limiting examples, the vehicles can be manned or unmanned aircraft such as, without limitation, a fixed wing aircraft, a rotary wing aircraft, and a lighter-than-air (LTA) craft.

In various examples, the light arrays 142 are located on the lower forward fuselage of the tanker aircraft 100. The light arrays 142 are positioned to be clearly viewable by the pilot of the receiver aircraft 202. Moreover, the light arrays 142 includes various lights for providing directional information to the pilot of the receiver aircraft 202. The light arrays 142 may include an approach light bar, an elevation light bar, a fore/aft position light bar, four longitudinal reflectors, two lateral reflectors, or other lights.

In various examples, (optionally non-transitory) computer readable instructions (i.e., code) stored in the memory 114 (i.e., storage media) cause the processor 104 to use raw image data from a single sensor (i.e., the camera 120) and make the raw data scalable and cost-effective to integrate into existing systems. In particular examples, the processor 104 predicts keypoints 310 (see, e.g., Figure 3) of the receiving aircraft 202 within the 2D image 300 using semantic keypoints as input (with an unknown model), and outputs estimates for 6DOF and shape parameters. Furthermore, the outputs are tracked for use in a subsequent prediction in the next timestep (i.e., iteration).

In various examples, prediction of the pose (i.e., the 6DOF, which include the position parameters x, y, z and the orientation parameters roll, pitch, yaw) is performed using arbitrary models given semantic keypoints as input. The actual model/shape is unknown, but an accurate 6DOF can be predicted from a set of keypoints that are semantically correct (i.e., keypoints between different models that still have the same meaning, such as a keypoint representing the head, wing, etc.). Further, the results of previous optimizations are used at the next timestep for improving performance of predicting 6DOF pose for the target object (e.g., the receiving aircraft 202).

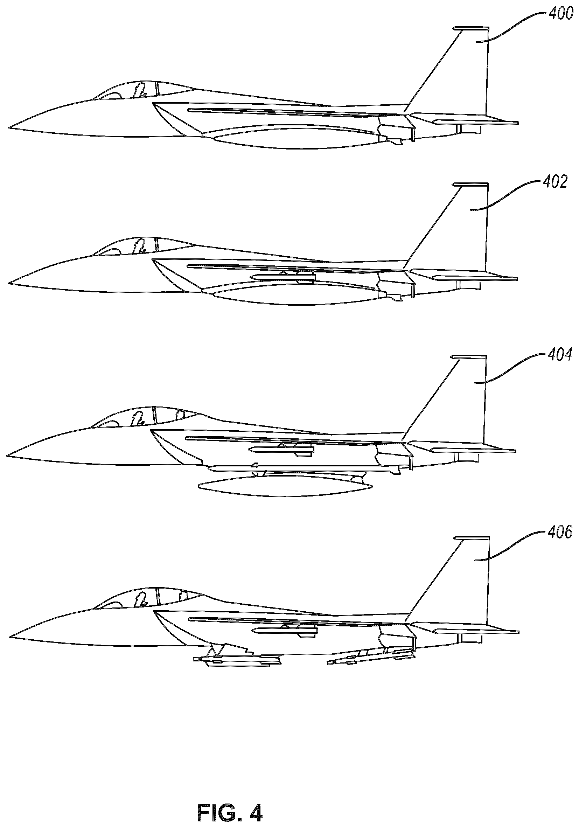

Referring to Figure 4, by way of example, an aircraft type can have multiple different variations (e.g., first aircraft variation 400, second aircraft variation 402, third aircraft variation 404, and fourth aircraft variation 406 each having a configuration that is different than the configurations of the other variations). In various examples, the refueling system 102 only uses a semantic keypoint model. The semantic keypoint model used by the refueling system 102 includes keypoints that would be common across all or most of the variations of an aircraft type.

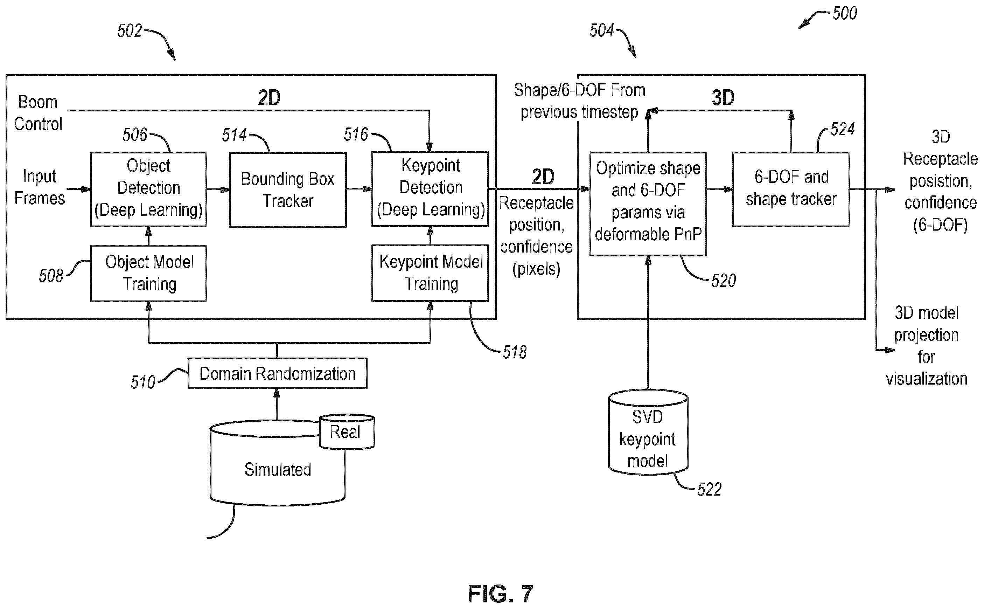

In various embodiments, methods and systems provide in-domain or out-of-domain determination with regard to 2D-to-3D pose estimation pipelines which may include at least the following two stages (see, e.g., Figure 7):

Stage 1: given a 2D image, output 2D keypoint estimates; and
Stage 2: given a set of 2D keypoint estimates, solve the Perspective-n-Point (PnP) problem to find the corresponding 6 degree-of-freedom position information (6DOF pose).

A neural network, such as a masked autoencoder (MAE), is previously trained to characterize training data (i.e., real data). By learning to characterize training data, the MAE can be used to detect any data that is not in the training set, where a vision system might have lower chances of providing an accurate 6DoF estimate. The learning process for the MAE only considers training data, and it is specifically trained for the "reconstruction" objective. Here, reconstruction means that data is input to the neural network, the neural network computes an alternate representation of the data (for example, a compressed representation), and then the neural network attempts to output data that is identical to the input. In the case of 2D images, the neural network would take a 2D image as input and be trained to produce an identical (or close to) image. A neural network that compresses the input data, then decompresses it, while being trained for reconstruction is called an autoencoder.

The MAE is trained similarly to traditional denoising autoencoders. In this style of training, each input image is first altered. Specifically, portions (pixels) of the 2D image are masked out. Then, the MAE is trained to reconstruct the unaltered image from the altered image, even when the input image is severely masked, e.g., 80% to 90% of the image can be destroyed/removed by the masking process.

In various embodiments, the MAE may be improved by adding additional components that increase the visual fidelity of the reconstructions. With the standard MAE, reconstructed images can retain image artifacts reminiscent of the shape of the mask. This causes difficulties when trying to automatically assess whether a reconstruction is sufficiently similar enough to be called "In Domain", or different enough to be called "Out of Domain" (OOD). To improve the visual quality, the output of the MAE is augmented with an adversarial discriminator. The adversarial discriminator is a model that is trained to detect training data versus reconstructed data. It takes an image as input and produces a probability that the image comes from the training data. The adversarial discriminator may see an unmasked flight image from the training set, or it may see a reconstructed image. It is trained to tell the two categories apart, and to give information to the MAE about how to improve the reconstruction such that it's hard to distinguish between the two.

In various embodiments, when the MAE receives an image from the camera, a mask is applied, and a reconstruction of the image occurs. The quality of the MAE reconstructions is generally lower for images that differ from those used in training data, so if the reconstruction is sufficiently different than the unmasked input, then we call that image OOD. Because the output of the MAE is a possibly large 2D image (e.g. a 256x256 pixel image), it's useful to summarize the difference between the input image and the reconstructed image into a single number that can be used as an OOD score. One embodiment is to use a structural similarity index measure (SSIM) to produce the OOD score. SSIM uses a sliding window approach to compute the difference between two images, taking into account local changes in brightness, luminance, contrast, and structure. The SSIM score is a single value that ranges from 0 to 1, where 1 indicates the images are identical, and 0 indicates the opposite. To summarize, to process a given input image, we apply a random mask, input the masked image to an MAE, receive the reconstructed output, and then, we compute the SSIM score between the unmodified image and its reconstruction under the MAE. If that score is lower than a predetermined threshold, the input image is discarded (i.e., thrown out) and designated as OOD.

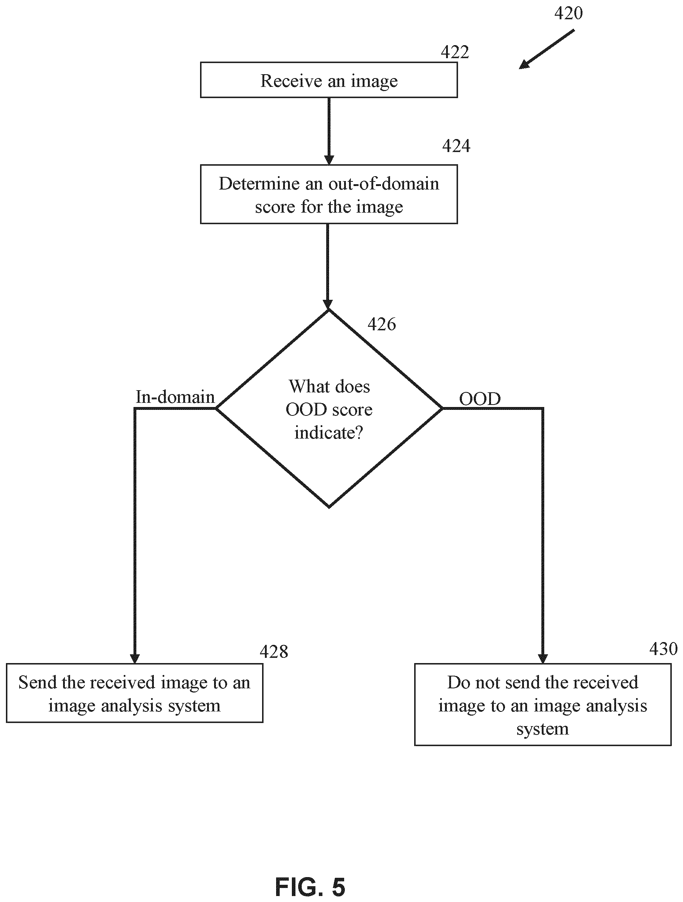

In various embodiments, as shown in Figure 5, an exemplary method 420 checks and verifies the validity of a 2D image received from the camera 120 (Figure 1). At a block 422, an image is received for analysis. At a block 424, an OOD score is determined for the received image. At a decision block 426, an analysis of the OOD score is performed. If the analysis determines that the OOD score is in-domain, then, at a block 428, the received image is sent to an image analysis system (vision position estimation system). If the analysis determines that the OOD score is OOD, then, at a block 430, the received image is not sent to an image analysis system (vision position estimation system).

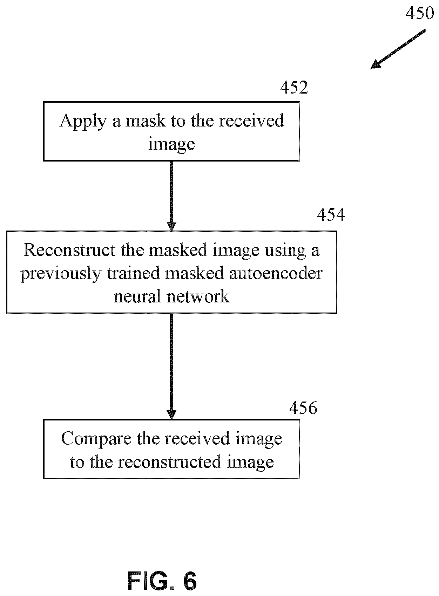

In various embodiments, as shown in Figure 6, an exemplary method 450 determines the OOD score for the received image from block 424 of Figure 5. At a block 452, a mask is applied to the received image. At a block 454, an image is constructed (i.e., reconstructed image) from the masked image using the previously trained MAE or a generative adversarial network (GAN). At a block 456, an OOD score is determine by comparing the received image to the reconstructed image.

In various embodiments, the processor 104 estimates whether or not incoming flight data is out-of-domain (OOD) with respect to the training data, and thus will yield unreliable predictions. During runtime, an OOD detection of some incoming data (e.g., another/subsequent 2D image) can be used to quickly decide that operating conditions are not suitable for refueling. This system would be important in conditions where the automated system is more accurate than human perception. In this setting, an accurate pose estimation from the system would not override the fact that operating conditions are poor or unsafe. In an automated setting, where a pose estimate is used for robotic control, an OOD detection score is a quantity that can be used by an automated controller or system (e.g., an autopilot system) to make decisions, such as when to engage or pause due to unfavorable operating conditions.

Referring to Figure 7, the processor 104 executes the instructions stored in the memory 114 to perform a process 500 that includes a 2D stage 502 and a 3D stage 504. The process 500 includes pre-processing steps (e.g., object model training 508 and keypoint model training 518) and runtime steps (shape-pose optimization 520 and shape-pose tracking 524). In the keypoint model training 518, singular value decomposition (SVD) components are found using a data matrix created by multiple CAD model variations and random scalings thereof. Each of the CAD model variations has a 2D (number of keypoints multiplied by 3 coordinates per keypoint) array of points, which is converted to a flat one-dimensional (1D) vector before being added to the data matrix. Then, a mean of all samples in the data matrix (i.e., a base model) is performed. The SVD is then computed based on the difference of the data matrix and the mean of the data matrix. The mean of the data matrix ($B_0$) and the SVD components ($B_i$) are used later in the shape-pose optimization 520. The mean of the data matrix ($B_0$) and the SVD components ($B_i$) are saved in storage 522.

The 2D stage 502 additionally includes object detection 506 which detects the receiving aircraft 202 from the raw image data received from the camera system 106. Detection of the receiving aircraft 202 during the object detection 506 utilizes a trained deep neural network from the object model training 508 that processes the input to output a bounding box around a region of interest of the receiving aircraft 202.

In various examples, the 2D stage 502 also includes a bounding box tracker 514. The bounding box tracker 514 causes the processor 104 to generate a bounding box (e.g., bounding box 312 in Figure 3) around an area of interest within the 2D image 300 produced by the camera 120. The area of interest is an area where the receiving aircraft 202 is most likely to be located based on where the camera 120 is pointing. The bounding box minimizes the amount of unnecessary features within the 2D image 300 that would be analyzed by the processor 104. The processor 104 estimates position and orientation of a 3D model of the receiving aircraft 202 in 3D space. The estimated 3D model is then projected onto a virtual camera image in 2D space to produce a projection of the receiving aircraft 202. Then, a bounding box is made around the pixels that contain the projection of the receiving aircraft 202. The bounding box includes a buffer so as to include more of the image in case the projected receiving aircraft 202 does not match the real world.

### Singular Value Decomposition (SVD)

In some examples, the keypoint model training 518 determines the SVD components by initially starting with a few known models of variations of the receiving aircraft 202, keypoints are manually selected that are semantically similar (such as plane wing tips, nose, etc.) for each model, obtaining p x 3 keypoint data (where p is the number of keypoints, and 3 is for x, y, z coordinates of each keypoint) for each known model. Then, transformations, such as random scaling, are used to produce keypoint data of possible variations of the receiving aircraft 202. Given n samples (including known models and created variations), a data matrix Q of n x p x 3 is used. To apply SVD, the data matrix Q is flattened to an n x 3p matrix and the mean across n samples is determined. The mean is denoted by $B_0$, a 1 x 3p vector which is reshaped to 3 x p. The SVD is a statistical model of all the samples in data matrix Q. Next, $Q - B_0$ is computed, which normalizes each of the n samples to be centered around $B_0$. Then, k SVD components corresponding to largest eigenvalues of $Q - B_0$ are determined. The k SVD components are labelled $B_1, ... B_k$, which are reshaped to 3 x p just like $B_0$. In other words, the keypoint sets from various receiver variations and various random scalings are gathered into a matrix. A statistical model is constructed to represent the various keypoint sets in the matrix using the SVD. The statistical model is a more succinct representation of the data matrix, and the statistical model allows the keypoints to be parameterized, so that optimization can occur over these parameters to find the bestfitting keypoint set.

### Neural Network Keypoint Model Training

During the keypoint model training 518, a neural network is trained to predict semantic keypoints across all variations of the receiver aircraft 202. The neural network is called a keypoint detector (e.g., associated with the keypoint detection 516). In this case, domain randomization 510 is used to achieve better results. Another neural network is used as an object detector during the object detection 506, which is trained on input images and bounding boxes. At runtime, the input image(s) from the camera system 106 is cropped by the object detector (the object detection 506), which is then fed into the keypoint detector (the keypoint detection 516). The object detector neural network associated with the object detection 506 predicts bounding boxes from the fullframe image coming from the camera system 106 to get a more localized image of the receiver aircraft to provide input to the keypoint detector during the keypoint detection 516.

A convolutional neural network (CNN) is used for the deep learning-based keypoint detector associated with the keypoint detection 516. The keypoint detector is trained on the input images using all the variations of keypoint sets previously created.

The shape-pose optimization 520 finds the 6DOF pose via an optimization process that minimizes re-projection error. Shape parameters ($c_i$) and 6DOF parameters (R, T) are optimized based on the mean and SVD components and the semantic keypoints calculated above. R equals range and T equals translational position. A random sample consensus (RANSAC) algorithm is used to find inlier keypoints.

Below is an example optimization function L that is minimized (over R, T, c):

$$L = \left\| proj_{3D \to 2D} \left( T + R \left( B_0 + \sum_{i=1}^{k} c_i B_i \right) \right) - x \right\|_{fro}^{2} + f(c)$$

where f is a regularization function, typically $f(c) = a\|c\|^2$ for some parameter alpha (i.e., a user chosen regularization hyperparameter), and x are the predicted 2D keypoints from keypoint detection 516. The optimization function performs deformable optimization loss using the following deformable model based on the SVD decomposition:

$$M_{deformable} = B_0 + \sum_{i=1}^{n} c_i B_i$$

To incorporate RANSAC, an inliers matrix D (that is diagonal with $D_{i,j} = 1$ if j is an inlier keypoint) is added to the optimization function L, namely:

$$L = \left\| \left( proj_{3D-2D}\left( T + R\left(B_0 + \sum_{i=1}^{k} c_i B_i\right) \right) - x \right) D \right\|_{fro}^2 /trace + f_{RANSAC}(c)$$

where $f_{RANSAC}(c)$ may have a different alpha value for example.

During the shape-pose tracking 524, the process 500 tracks the shape parameters ($c_i$) and 6DOF to use in a next round of optimization. Because the process 500 is tracking the 6DOF of a single object moving in space, the previous 6DOF is a close guess as to where the actual object is located. Further, the object's shape should not change as it moves, except to achieve a tighter fit. At a predetermined number of iterations, optimization over shape parameters is stopped. Also, the shape-pose tracking 524 outputs a confidence value for the 6DOF pose or for a 6DOF pose for a feature (e.g., a nozzle receptacle of the receiving aircraft 202).

In various examples, the parameters R, T, c are tracked via a Kalman filter, and used as an initial guess in the optimization of the next frame (with different x). After some time, the c parameter is fixed, stopping optimization over the c parameter. In other words, once the shape of the tracked object is known, there is no longer a need to predict the shape, and the optimization function L is used to only minimize over R and T.

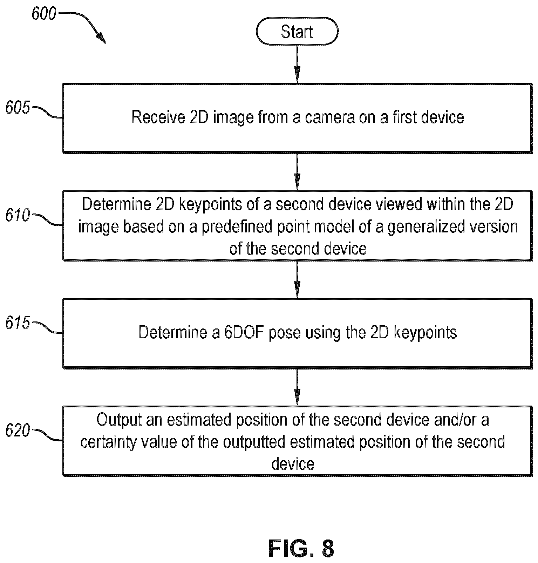

Referring to Figure 8, a method 600 includes outputting an estimated position of a second device relative to a first device and/or a certainty value of the outputted estimated position of the second object. Block 605 of the method 600 includes receiving a 2D image from a camera on a first device. Block 610 of the method 600 includes determining 2D keypoints of a second device viewed within the 2D image based on a predefined point model of a generalized version of the second device. Block 615 of the method 600 includes determining a 6DOF pose using the 2D keypoints. Block 620 of the method 600 includes outputting an estimated position of the receiving device.

The above-described methods may apply to any dataset of 2D images, whether they are from cameras, simulation/digital recreation, scanned drawings/paintings, or other sources.

The following is a non-exhaustive list of examples, which may or may not be claimed, of the subject matter, disclosed herein.

The following portion of this paragraph delineates example 1 of the subject matter, disclosed herein. According to example 1, a method includes receiving a 2D image from a camera and determining a domain score for the 2D image based on previously defined training data.

The following portion of this paragraph delineates example 2 of the subject matter, disclosed herein. According to example 2, which encompasses example 1, above, the method further comprises sending the 2D image to the vision position estimation system in response to the domain score being greater than a predefined threshold, thus creating a sent 2D image.

The following portion of this paragraph delineates example 3 of the subject matter, disclosed herein. According to example 3, which encompasses examples 1 or 2, above, the method further comprises using the masked autoencoder neural network to reconstruct the 2D image and comparing the reconstructed 2D image to the 2D image using the masked autoencoder neural network.

The following portion of this paragraph delineates example 4 of the subject matter, disclosed herein. According to example 4, which encompasses examples any of examples 1-3, above, the method further comprises using a generative adversarial network to reconstruct the 2D image and comparing the reconstructed 2D image to the 2D image.

The following portion of this paragraph delineates example 5 of the subject matter, disclosed herein. According to example 5, which encompasses any of examples 1-4, above, the method further comprises using a structural similarity index measure to determine the domain score.

The following portion of this paragraph delineates example 6 of the subject matter, disclosed herein. According to example 6, which encompasses any of examples 2-5, above, the method further comprises detecting 2D keypoints of a target object using the sent 2D image.

The following portion of this paragraph delineates example 7 of the subject matter, disclosed herein. According to example 7, which encompasses example 6, above, the method further comprises determining a 6 degree-of-freedom (6DOF) pose of the target object using the 2D keypoints and sending the 6DOF pose to an autopilot system.

The following portion of this paragraph delineates example 8 of the subject matter, disclosed herein. According to example 8, a system comprising a camera configured to produce a two-dimensional (2D) image of a first device after activating a vision position estimation system, a processor, and (optionally non-transitory) computer readable storage media storing code. The code is executable by the processor to perform operations comprising determining a domain score for the 2D image based on previously defined training data.

The following portion of this paragraph delineates example 9 of the subject matter, disclosed herein. According to example 9, which encompasses example 8, above, the processor is further configured to perform an operation comprising sending the 2D image the vision position estimation system in response to the domain score being greater than a predefined threshold, thus creating a sent 2D image.

The following portion of this paragraph delineates example 10 of the subject matter, disclosed herein. According to example 10, which encompasses examples 8 or 9, above, determining the domain score comprises using a masked autoencoder neural network to reconstruct the 2D image and comparing the reconstructed 2D image to the 2D image. The masked autoencoder neural network was previously trained using the training data.

The following portion of this paragraph delineates example 11 of the subject matter, disclosed herein. According to example 11, which encompasses any one of examples 8-10, above, wherein determining the domain score comprises using a generative adversarial network to reconstruct the 2D image and comparing the reconstructed 2D image to the 2D image.

The following portion of this paragraph delineates example 12 of the subject matter, disclosed herein. According to example 12, which encompasses any of examples 8-11, above, the processor is further configured to perform an operation comprising using a structural similarity index measure to determine the domain score.

The following portion of this paragraph delineates example 13 of the subject matter, disclosed herein. According to example 13, which encompasses example 9, above, wherein the processor is further configured to perform operations comprising determining a 6 degree-of-freedom (6DOF) pose of the target object using the 2D keypoints and sending the 6DOF pose to an autopilot system.

The following portion of this paragraph delineates example 14 of the subject matter, disclosed herein. According to example 14, which encompasses example 13, above, the vision position estimation system comprises a refueling image analysis system, the training data is associated with the target object, and the target object comprises one of a refueling aircraft, a tanker aircraft, or a refueling boom.

The following portion of this paragraph delineates example 15 of the subject matter, disclosed herein. According to example 15, a tanker aircraft comprising a camera, a refueling boom, a processor, and (optionally non-transitory) computer readable storage media storing code. The camera is configured to generate a two-dimensional (2D) image of the refueling boom, The code is executable by the processor to perform operations comprising determining a domain score for the 2D image based on previously defined training data and sending the 2D image to a vision position estimation system in response to the domain score being greater than a predefined threshold, thus creating a sent 2D image.

The following portion of this paragraph delineates example 16 of the subject matter, disclosed herein. According to example 16, which encompasses example 15, above, the processor is further configured to perform an operation comprising sending the 2D image to a vision position estimation system in response to the domain score being greater than a predefined threshold, thus creating a sent 2D image.

The following portion of this paragraph delineates example 17 of the subject matter, disclosed herein. According to example 17, which encompasses any one of examples 15 and 16, above, determining the domain score comprises using a masked autoencoder neural network to reconstruct the 2D image and comparing the reconstructed 2D image to the 2D image.

The following portion of this paragraph delineates example 18 of the subject matter, disclosed herein. According to example 18, which encompasses any one of examples 15-17, above, determining the domain score comprises using a generative adversarial network to reconstruct the 2D image and comparing the reconstructed 2D image to the 2D image.

The following portion of this paragraph delineates example 19 of the subject matter, disclosed herein. According to example 19, which encompasses any of examples 15-18, above, wherein the processor is further configured to perform an operation comprising using a structural similarity index measure to determine the domain score.

The following portion of this paragraph delineates example 20 of the subject matter, disclosed herein. According to example 20, which encompasses example 16, above, the tanker aircraft further comprising an autopilot system and the processor is further configured to perform operations comprising determining a 6 degree-of-freedom (6DOF) pose of the target object using the 2D keypoints and sending the 6DOF pose to the autopilot system.

Those of skill in the art will appreciate that the various illustrative logical blocks, modules, circuits, and algorithm steps described in connection with the examples disclosed herein may be implemented as electronic hardware, computer software, or combinations of both. Some of the examples and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an example of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that examples described herein are merely exemplary implementations.

The various illustrative logical blocks, modules, and circuits described in connection with the examples disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an example of a system or a component may employ various integrated circuit components, e.g., memory elements, digital signal processing elements, logic elements, look-up tables, or the like, which may carry out a variety of functions under the control of one or more microprocessors or other control devices.

In the above description, certain terms may be used such as "up," "down," "upper," "lower," "horizontal," "vertical," "left," "right," "over," "under" and the like. These terms are used, where applicable, to provide some clarity of description when dealing with relative relationships. But these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a,'' "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other but having one or more additional elements between the coupled elements. Further, as used herein, securing one element to another element can include direct securing and indirect securing. Additionally, as used herein, "adjacent" does not necessarily denote contact. For example, one element can be adjacent to another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lowernumbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

Those skilled in the art will recognize that at least a portion of the controllers, devices, units, and/or processes described herein can be integrated into a data processing system. Those having skill in the art will recognize that a data processing system generally includes one or more of a system unit housing, a video display device, memory such as volatile or non-volatile memory, processors such as microprocessors or digital signal processors, computational entities such as operating systems, drivers, graphical user interfaces, and applications programs, one or more interaction devices (e.g., a touch pad, a touch screen, an antenna, etc.), and/or control systems including feedback loops and control motors (e.g., feedback for sensing position and/or velocity; control motors for moving and/or adjusting components and/or quantities). A data processing system may be implemented utilizing suitable commercially available components, such as those typically found in data computing/communication and/or network computing/communication systems.

The term controller/processor, as used in the foregoing/following disclosure, may refer to a collection of one or more components that are arranged in a particular manner, or a collection of one or more general-purpose components that may be configured to operate in a particular manner at one or more particular points in time, and/or also configured to operate in one or more further manners at one or more further times. For example, the same hardware, or same portions of hardware, may be configured/reconfigured in sequential/parallel time(s) as a first type of controller (e.g., at a first time), as a second type of controller (e.g., at a second time, which may in some instances coincide with, overlap, or follow a first time), and/or as a third type of controller (e.g., at a third time which may, in some instances, coincide with, overlap, or follow a first time and/or a second time), etc. Reconfigurable and/or controllable components (e.g., general purpose processors, digital signal processors, field programmable gate arrays, etc.) are capable of being configured as a first controller that has a first purpose, then a second controller that has a second purpose and then, a third controller that has a third purpose, and so on. The transition of a reconfigurable and/or controllable component may occur in as little as a few nanoseconds, or may occur over a period of minutes, hours, or days.

**In** some such examples, at the time the controller is configured to carry out the second purpose, the controller may no longer be capable of carrying out that first purpose until it is reconfigured. A controller may switch between configurations as different components/modules in as little as a few nanoseconds. A controller may reconfigure on-the-fly, e.g., the reconfiguration of a controller from a first controller into a second controller may occur just as the second controller is needed. A controller may reconfigure in stages, e.g., portions of a first controller that are no longer needed may reconfigure into the second controller even before the first controller has finished its operation. Such reconfigurations may occur automatically, or may occur through prompting by an external source, whether that source is another component, an instruction, a signal, a condition, an external stimulus, or similar.

For example, a central processing unit/processor or the like of a controller may, at various times, operate as a component/module for displaying graphics on a screen, a component/module for writing data to a storage medium, a component/module for receiving user input, and a component/module for multiplying two large prime numbers, by configuring its logical gates in accordance with its instructions. Such reconfiguration may be invisible to the naked eye, and in some examples may include activation, deactivation, and/or re-routing of various portions of the component, e.g., switches, logic gates, inputs, and/or outputs. Thus, in the examples found in the foregoing/following disclosure, if an example includes or recites multiple components/modules, the example includes the possibility that the same hardware may implement more than one of the recited components/modules, either contemporaneously or at discrete times or timings. The implementation of multiple components/modules, whether using more components/modules, fewer components/modules, or the same number of components/modules as the number of components/modules, is merely an implementation choice and does not generally affect the operation of the components/modules themselves. Accordingly, it should be understood that any recitation of multiple discrete components/modules in this disclosure includes implementations of those components/modules as any number of underlying components/modules, including, but not limited to, a single component/module that reconfigures itself over time to carry out the functions of multiple components/modules, and/or multiple components/modules that similarly reconfigure, and/or special purpose reconfigurable components/modules.

**In** some instances, one or more components may be referred to herein as "configured to," "configured by," "configurable to," "operable/operative to," "adapted/adaptable," "able to," "conformable/conformed to," etc. Those skilled in the art will recognize that such terms (for example "configured to") generally encompass activestate components and/or inactive-state components and/or standby-state components, unless context requires otherwise.

The foregoing detailed description has set forth various examples of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples can be implemented, individually and/or collectively, by a wide range of hardware, software (e.g., a high-level computer program serving as a hardware specification), firmware, or virtually any combination thereof, limited to patentable subject matter under 35 U.S.C. 41. In an example, several portions of the subject matter described herein may be implemented via Application Specific Integrated Circuits (ASICs), Field Programmable Gate Arrays (FPGAs), digital signal processors (DSPs), or other integrated formats. However, those skilled in the art will recognize that some aspects of the examples disclosed herein, in whole or in part, can be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, limited to patentable subject matter under 35 U.S.C. 41, and that designing the circuitry and/or writing the code for the software (e.g., a high-level computer program serving as a hardware specification) and or firmware would be well within the skill of one of skill in the art in light of this disclosure. In addition, those skilled in the art will appreciate that the mechanisms of the subject matter described herein are capable of being distributed as a program product in a variety of forms, and that an illustrative example of the subject matter described herein applies regardless of the particular type of signal bearing medium used to actually carry out the distribution. Examples of a signal bearing medium include, but are not limited to, the following: a recordable type medium such as a floppy disk, a hard disk drive, a Compact Disc (CD), a Digital Video Disk (DVD), a digital tape, a computer memory, etc.; and a transmission type medium such as a digital and/or an analog communication medium (e.g., a fiber optic cable, a waveguide, a wired communications link, a wireless communication link (e.g., transmitter, receiver, transmission logic, reception logic, etc.), etc.).

With respect to the appended claims, those skilled in the art will appreciate that recited operations therein may generally be performed in any order. Also, although various operational flows are presented in a sequence(s), it should be understood that the various operations may be performed in other orders than those which are illustrated or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to,'' "related to," or other past-tense adjectives are generally not intended to exclude such variants, unless context dictates otherwise. The present subject matter may be embodied in other specific forms without departing from its scope. The described examples are to be considered in all respects only as illustrative and not restrictive. All changes which come within the meaning and range of equivalency of the claims are to be embraced within their scope.

Also disclosed are the following clauses:

1. A method comprising:

   receiving a two-dimensional (2D) image from a camera of a first device after activating a vision position estimation system; and
   determining a domain score for the 2D image based on previously defined training data.

2. The method of Clause 1, further comprising sending the 2D image to the vision position estimation system in response to the domain score being greater than a predefined threshold, thus creating a sent 2D image.

3. The method of Clauses 1 or 2, wherein determining the domain score comprises:

using a masked autoencoder neural network to reconstruct the 2D image to create a reconstructed 2D image; and
comparing the reconstructed 2D image to the 2D image.

4. The method of any of Clauses 1 to 3, wherein determining the domain score comprises:

using a generative adversarial network to reconstruct the 2D image; and
comparing the reconstructed 2D image to the 2D image.

5. The method of any of Clauses 1 to 4, further comprising using a structural similarity index measure to determine the domain score.

6. The method of Clause 2, further comprising:

determining a 6 degree-of-freedom (6DOF) pose of a target object using the sent 2D image; and
sending the 6DOF pose to a vision position estimation system.

7. The method of Clause 6, wherein:

the vision position estimation system comprises an autopilot system;
the previously defined training data is associated with the target object; and
the target object comprises one of a refueling aircraft, a tanker aircraft, or a refueling boom.

8. A system comprising:

a camera configured to produce a two-dimensional (2D) image of a first device after activating a vision position estimation system;
a processor; and
non-transitory computer readable storage media storing code, the code being executable by the processor to perform operations comprising determining a domain score for the 2D image based on previously defined training data.

9. The system of Clause 8, wherein the processor is further configured to perform an operation comprising sending the 2D image the vision position estimation system in response to the domain score being greater than a predefined threshold, thus creating a sent 2D image.

10. The system of Clauses 8 or 9, wherein determining the domain score comprises:

using a masked autoencoder neural network to reconstruct the 2D image; and
comparing the reconstructed 2D image to the 2D image,
wherein the masked autoencoder neural network was trained using the previously defined training data.

11. The system of any of Clauses 8 to 10, wherein determining the domain score comprises:

using a generative adversarial network to reconstruct the 2D image; and
comparing the reconstructed 2D image to the 2D image.

12. The system of any of Clauses 8 to 11, wherein the processor is further configured to perform an operation comprising using a structural similarity index measure to determine the domain score.

13. The system of Clause 9, wherein the processor is further configured to perform operations comprising:

determining a 6 degree-of-freedom (6DOF) pose of a target object using the sent 2D image; and
sending the 6DOF pose to an autopilot system.

14. The system of Clause 13, wherein:

the vision position estimation system comprises a refueling image analysis system;
the previously defined training data is associated with the target object; and
the target object comprises one of a refueling aircraft, a tanker aircraft, or a refueling boom.

15. A tanker aircraft comprising:

a camera;
a refueling boom, wherein the camera is configured to generate a two-dimensional (2D) image of the refueling boom;
a processor; and
non-transitory computer readable storage media storing code, the code being executable by the processor to perform operations comprising determining a domain score for the 2D image based on previously defined training data.

16. The tanker aircraft of Clause 15, wherein the processor is further configured to perform an operation comprising sending the 2D image to a vision position estimation system in response to the domain score being greater than a predefined threshold, thus creating a sent 2D image.

17. The tanker aircraft of Clauses 15 or 16, wherein determining the domain score comprises:

using a masked autoencoder neural network to reconstruct the 2D image; and
comparing the reconstructed 2D image to the 2D image.

18. The tanker aircraft of any of Clauses 15 to 17, wherein determining the domain score comprises:

using a generative adversarial network to reconstruct the 2D image; and
comparing the reconstructed 2D image to the 2D image.

19. The tanker aircraft of any of Clauses 15 to 19, wherein the processor is further configured to perform an operation comprising using a structural similarity index measure to determine the domain score.

20. The tanker aircraft of Clause 16, further comprising an autopilot system, wherein the processor is further configured to perform operations comprising:

determining a 6 degree-of-freedom (6DOF) pose of a target object using the sent 2D image; and
sending the 6DOF pose to the autopilot system.

**Claims**

1.  A method for analyzing input images for an aerial refueling operation comprising:

receiving a two-dimensional (2D) image from a camera of a first device after activating a vision position estimation system for determining the position and/or pose of a target object; and
determining a domain score for the 2D image based on previously defined training data, wherein the domain score represents a measure of similarity of the 2D image compared to the previously defined training data.

2.  The method of Claim 1, wherein the first device is a tanker aircraft, or a refueling boom.

3.  The method of Claims 1 or 2, further comprising:
determining whether to send the 2D image to the vision position estimation system based on the domain score.

4.  The method of Claim 3, further comprising sending the 2D image to the vision position estimation system in response to the domain score being greater than a predefined threshold, thus creating a sent 2D image.

5.  The method of Claims 3 or 4, further comprising not sending the 2D image to the vision position estimation system in response to the domain score being less than a/the predefined threshold, thus creating a discarded 2D image.

**EP 4 704 043 A1**

6. The method of any of Claims 1 to 5, wherein determining the domain score comprises:

using a masked autoencoder neural network to reconstruct the 2D image to create a reconstructed 2D image; and comparing the reconstructed 2D image to the 2D image.

7. The method of any of Claims 1 to 6, wherein determining the domain score comprises:

using a generative adversarial network to reconstruct the 2D image; and comparing the reconstructed 2D image to the 2D image.

8. The method of any of Claims 1 to 7, further comprising using a structural similarity index measure to determine the domain score.

9. The method of Claim 4, further comprising:

determining a 6 degree-of-freedom (6DOF) pose of the target object using the sent 2D image; and sending the 6DOF pose to an autopilot system.

10. The method of Claim 9, further comprising: instructing the autopilot system to engage or pause the aerial refueling operation based on the domain score of a subsequent 2D image received by the camera of the first device.

11. The method of any of Claims 1 to 10, wherein the target object comprises one of a refueling aircraft, a tanker aircraft, or a refueling boom.

12. A system for analyzing input images for an aerial refueling operation comprising:

a camera configured to produce a two-dimensional (2D) image of a first device after activating a vision position estimation system;
a processor; and
computer readable storage media storing code, the code being executable by the processor to perform the method of any of claims 1 to 11.

13. The system of Claim 12, wherein the processor is further configured to perform an operation comprising sending the 2D image the vision position estimation system in response to the domain score being greater than a predefined threshold, thus creating a sent 2D image.

14. The system of Claims 12 or 13, wherein determining the domain score comprises:

using a masked autoencoder neural network to reconstruct the 2D image; and
comparing the reconstructed 2D image to the 2D image,
wherein the masked autoencoder neural network was trained using the previously defined training data.

15. A tanker aircraft comprising:

a camera;
a refueling boom, wherein the camera is configured to generate a two-dimensional (2D) image of the refueling boom;
a processor; and
computer readable storage media storing code, the code being executable by the processor to perform the method of any of claims 1 to 11.

14

100

TANKER AIRCRAFT

102

106

CAMERA SYSTEM

120 — CAMERA

122 — VIDEO IMAGE PROCESSOR

124 — IMAGE GENERATOR

110

BOOM OPERATOR INTERFACE

INTERFACE DEVICE — 130

MONITOR — 132

MEMORY

114

104

PROCESSOR

AUTOMATED REFUELING SYSTEM

112

DIRECTOR LIGHT SYSTEM — 108

SWITCHING UNIT — 140

LIGHT ARRAYS — 142

**FIG. 1**

FIG. 2

FIG. 3

EP 4 704 043 A1

400

402

404

406

FIG. 4

420

422

Receive an image

424

Determine an out-of-domain
score for the image

426

What does
OOD score
indicate?

In-domain

OOD

428

Send the received image to an
image analysis system

430

Do not send the received
image to an image analysis
system

FIG. 5

450

452

```
Apply a mask to the received
image
```

454

```
Reconstruct the masked image using a
previously trained masked autoencoder
neural network
```

456

```
Compare the received image
to the reconstructed image
```

FIG. 6

FIG. 7

FIG. 8

Europäisches Patentamt

European Patent Office

Office européen des brevets

# EUROPEAN SEARCH REPORT

**Application Number**

EP 25 18 7498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/026394 A1 (ROCK JASON J [US] ET AL) 26 January 2023 (2023-01-26)<br>* paragraph [0026] - paragraph [0033] *<br>* claim 16 *<br>* figure 1 *<br>----- | 1-15 | INV.<br>G06V10/74<br>G06V10/82<br>G06V20/17 |
| A | Woodland Mckell ET AL: "StyleGAN2-based Out-of-Distribution Detection for Medical Imaging",<br>arXiv,<br>10 July 2023 (2023-07-10), pages 1-5,<br>XP093324249,<br>DOI: 10.48550/ARXIV.2307.10193<br>Retrieved from the Internet:<br>URL:https://doi.org/10.48550/arXiv.2307.10193<br>[retrieved on 2025-10-10]<br>* page 1, column 1, line 30 - column 2, line 25 *<br>* page 5, column 2, line 27 - line 29 *<br>----- | 1-15 | |
| A | Bergmann Paul ET AL: "Improving Unsupervised Defect Segmentation by Applying Structural Similarity to Autoencoders",<br>arXiv,<br>1 February 2019 (2019-02-01), pages 1-8,<br>XP093324247,<br>Retrieved from the Internet:<br>URL:http://arxiv.org/abs/1807.02011<br>[retrieved on 2025-10-10]<br>* page 670, line 21 - page 671, line 5 *<br>* page 675, line 22 - line 23 *<br>----- | 1-15 | **TECHNICAL FIELDS SEARCHED (IPC)**<br><br>G06V |

-/--

The present search report has been drawn up for all claims

| Place of search | Date of completion of the search | Examiner |
|---|---|---|
| The Hague | 13 October 2025 | De Coi, Juri |

EPO FORM 1503 03.82 (P04C01)

page 1 of 2

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | BIONDA ANDREA ET AL: "Deep Autoencoders for Anomaly Detection in Textured Images Using CW-SSIM", 17 May 2022 (2022-05-17), 20220517, PAGE(S) 669 - 680, XP047622876, [retrieved on 2022-05-17] * abstract * ----- | 1-15 | |

TECHNICAL FIELDS
SEARCHED        (IPC)

The present search report has been drawn up for all claims

| Place of search | Date of completion of the search | Examiner |
| --- | --- | --- |
| The Hague | 13 October 2025 | De Coi, Juri |

## ANNEX TO THE EUROPEAN SEARCH REPORT
## ON EUROPEAN PATENT APPLICATION NO.

EP 25 18 7498

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2025

| Patent document cited in search report | Publication date | Patent family member(s) | Publication date |
|---|---|---|---|
| US 2023026394 A1 | 26-01-2023 | NONE | |

EPO FORM P0459

For more details about this annex : see Official Journal of the European Patent Office, No. 12/82